(19) Europäisches Patentamt
European Patent Office
Office européen des brevets

(11) Publication number: 0 190 657 B1

(12) **EUROPEAN PATENT SPECIFICATION**

(45) Date of publication of patent specification: **15.04.92**

(51) Int. Cl.$^5$: **G02B 6/06**

(21) Application number: **86101161.7**

(22) Date of filing: **29.01.86**

# (54) Silica glass optical conductor.

(30) Priority: **01.02.85 JP 19131/85**

(43) Date of publication of application:
**13.08.86 Bulletin 86/33**

(45) Publication of the grant of the patent:
**15.04.92 Bulletin 92/16**

(84) Designated Contracting States:
**DE FR GB IT**

(56) References cited:
**DE-A- 3 002 363**
**DE-C- 2 462 944**
**US-A- 4 213 672**
**US-A- 4 367 918**
**US-A- 4 392 715**

(73) Proprietor: **DORYOKURO KAKUNENRYO KAIHATSU JIGYODAN**
**9-13, Akasaka 1-chome**
**Minato-ku Tokyo 107(JP)**

Proprietor: **Mitsubishi Cable Industries, Ltd.**
**8, Nishino-cho Higashimukaijima Amagasaki-shi**
**Hyogo-ken 660(JP)**

(72) Inventor: **Ara,Kuniaki,O-arai Eng.Ctr.of Doryokuro,Kakunenryo**
**Kaihatsu Jigyodan 4002 Narita-cho O-arai-cho**
**Higashiibaragi-gun Ibaragi-ken(JP)**
Inventor: **Rindo,Hiroshi,O-arai Eng.Ctr.of Doryokuro Kakunenr**
**yo Kaihatsu Jigyodan 4002 Narita-cho O-arai-cho**
**Higashiibaragi-gun Ibaragi-ken(JP)**
Inventor: **Nakamoto,Koichiro,O-arai Eng.Ctr.of Doryokuro**
**Kakunenryo,Kaihatsu Jigyodan 4002 Narita-cho O-**
**arai-cho,Higashiibaragi-gun,Ibaragi-ken(JP)**
Inventor: **Ishitobi, Masami Kansai Plant (Itami branch)**
**Dainichi-Nippon Cables Ltd. 3, Ikejiri, 4-chome**
**Itami-shi Hyogo(JP)**

(74) Representative: **von Kreisler, Alek, Dipl.-Chem. et al**
**Deichmannhaus am Hauptbahnhof**
**W-5000 Köln 1(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

## Description

The present invention relates to an optical conductor comprising a silica glass fiber, such as an optical fiber for telecommunication, a multiple fiber for an image scope, and a light guide for illumination.

It has been proposed or tried to use an optical condutor as a means for telecommunication, measurement, and control in nuclear facilities, such as a nuclear reactor where the optical conductor is possibly exposed to nuclear radiation at a high temperature.

It is well-known that optical conductor comprising a silica glass fiber, which are prepared by drawing their preforms and applying a primary coating layer ( hereinafter the term, primary coating layer being briefly referred to as precoating layer ) on the surface thereof, have excellent radiation resistance as compared with multi-component glass optical conductors and, therefore, is suitable to be used in nuclear facilities. According to the studies of the present inventors, however, the radiation resistance of the optical conductors comprising a silica glass fiber are various, and are varied by the material of the precoating layer.

US-A-4 213 672 discloses a light waveguide, i.e. an optical conductor comprising, inter alia, polyimides.

An object of the present invention is to provide a radiation and heat resistant optical conductor comprising a silica glass fiber.

Another object of the present invention is to provide a radiation and heat resistant optical fiber used for telecommunication.

Still another object of the present invention is to provide a radiation and heat resistant multiple optical fiber used for various industrial facilities, meducal equipments and nuclear facilities.

Still another object of the present invention is to provide a radiation and heat resistant light guide used for illumination.

More specifically, the present invention provides an optical conductor according to claim 1. Further embodiments can be found in the dependant claims.

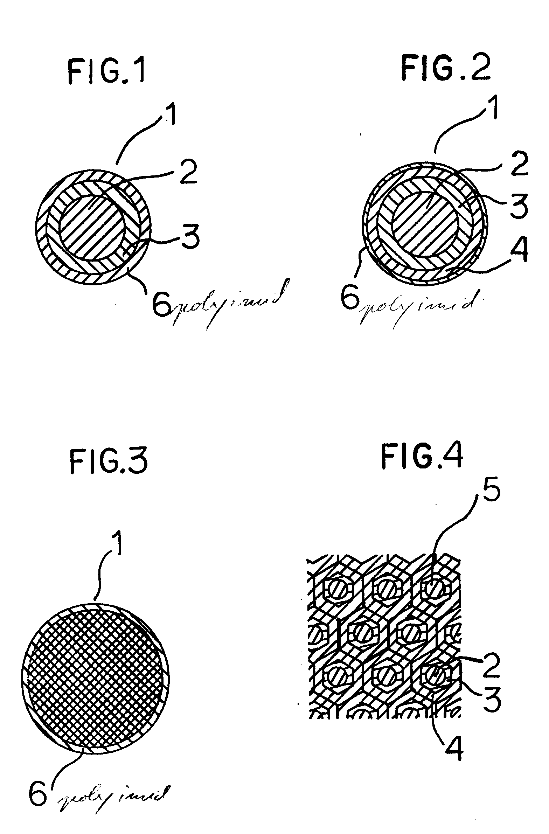

Each of Figs. 1 and 2 is a cross-sectional view of an optical fiber for telecommunication or a light guide for illumination in accordance with the present invention.

Fig. 3 is a cross-sectional view of a multiple optical fiber in accordance with the present invention.

Fig.4 is a magnified view of Fig. 3 in a portion of the cross-section.

Referring now in detail to Figs. 1 to 4, each optical conductor 1 comprises a core 2 and a cladding layer 3. The optical conductor 1 shown in Fig. 2 has furthermore a supporting layer 4 formed on the cladding layer 3. The optical conductor 1 shown in Fig. 3, which is a multiple optical conductor, has such a structure that a plurality of unit optical conductors 5 each of which consists of a core 2, a cladding layer 3 and a supporting layer 4 are fused together. Each of the optical conductors of Figs. 1 to 3 has a precoating layer 6 on the cladding layer 3 or on the supporting layer 4. The core 2, the cladding layer 3 and the supporting layer 4 is composed of a natural or synthetic silica glass doped with or without a dopant, respectively.

Preferably, the core 2 is composed of a pure silica glass having a purity of at least 99.99 % by weight, the cladding layer 3 is composed of a pure silica glass doped with boron and / or fluorine, and the supporting layer 4 is composed of a pure silica glass having a purity of at least 99.9 % by weight.

In the present invention a polyimide whose total content of sodium element and potassium element is less than 50 ppm, is used as the material of the precoating layer 6.

An optical conductor comprising a silica glass fiber with a polyimide, as a material of the precoating layer, whose total content of sodium element and potassium element is more than 50 ppm is poor in radiation resistance, and therefore is unsuitable for use in the radioactive environments as mentioned above.

Preferable polyimides to be used in the present invention are less than 10 ppm, especially less than 5 ppm in the total content of sodium element and potassium element, becauce the lower the above total content is, the more excellent in radiation resistance of the optical conductors, comprising a silica glass fiber.

A great variety of organic polymer having an imide group in main chain thereof may be used as polyimide in the present invention so far as it satisfies the requirement concerning the sodium-potassium content mentioned above.

Among them, such a polyimide is preferably used, which is at least 30 mole % , more preferably at least 50 mole % in the content of the recurring imide group represented by the following formula (1):

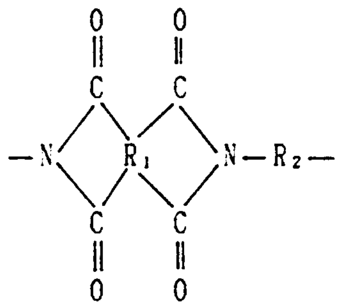

---------(1)

The recurring imide group is defined as the same recurring imide group of a polyimide which is prepared by reacting a diamine or a diisocyanate with a tetracarboxylic acid or a derivative thereof and thenafter by heating the polyamide acid thus obtained in order to change it to the polyimide, and the $R_1$,$R_2$ in the formula (1) are tetra-valent organic group of aliphatic, alicyclic, aromatic, or heterocyclic nature having a total carbon number of from about 4 to about 50, especially from about 6 to about 20, decided by the reacting raw materials used.

Examples of the diamine are meta-phenylene diamine; paraphenylene diamine; 2,2-bis(4-aminophenyl)-propane; 4,4'-diaminodiphenyl methane; 4,4'-diaminodiphenyl sulfide; 4,4'-diaminodiphenyl sulfone; 3,3'-diaminodiphenyl sulfone; 4,4'-diaminodiphenyl ether; 2,6-diaminopyridine; bis(4-aminophenyl)diethyl silane; bis(4-aminophenyl)diphenyl silane; benzidine; 3,3'-dichlorobenzidine; 3,3'-dimethoxybenzidine; bis(4-aminophenyl)ethyl phosphine oxide; 4,4'-diaminobenzophenone; bis(4-aminophenyl)phenyl phosphine oxide; bis(4-aminophenyl)-N-butylamine; bis(4-aminophenyl)-N-methylamine; 1,5-diaminonaphthalene; 3,3'-dimethyl-4,4'-diaminobiphenyl; N-(3-aminophenyl)-4-aminobenzamide; 4-aminophenyl-3-amionobenzoate; 2,4-bis(beta-amino-t-butyl)toluene; bis(p-beta-amino-t-butylphenyl)ether; p-bis(2-methyl-4-aminopentyl)-benzene; p-bis(1,1-dimethyl-5-aminopentyl)benzene; m-xylylene diamine; p-xylylene diamine, bis(4-aminophenyl)-N-phenylamine;and mixtures thereof.

Examples of the diisocyanate are ethylene diisocyanate; 1,4-tetramethylene diisocyanate; 1,6-hexamethylene diisocyanate; 1,12-dodecane diisocyanate; cyclobutene-1,3-diisocyanate; cyclohexane-1,3 and-1,4-diisocyanate; 1,3- and 1,4-phenylene diisocyanate; 2,4-and 2,6-tolylene diisocyanate; and mixtures thereof.

Examples of the tetra-carboxylic acid or derivatives thereof are pyromellitic dianhydride; 2,3,6.7-naphthalene-tetracarboxylic dianhydride; 1,2,5,6-naphthalene-tetracarboxylic anhydride; 3,4,9,10-perylene tetracarboxylic dianhydride; naphthalene-1,2,4,5-tetracarboxylic dianhydride; naphthalene-1,4,5,8-tetracarboxylic dianhydride; 2,6-dichloronaphthalene-1,4,5,8-tetracarboxylic dianhydride; 2,7-dichloronaphghalene-1,4,5,8-tetracarboxylic dianhydride; 2,3,6,7-tetrachloronaphthalene-1,4,5,8-tetracarboxylic dianhydride; phenanthrene-1,8,9.10-tetracarboxylic dianhydride; pyrizine-2,3,5,6-tetracarboxylic dianhydride; benzerne-1,2,3,4-tetracarboxylic dianhyudride; thiophene-2,3,4,5-tetracarboxylic dianhydride; and mixtures thereof.

Illustrative of polyamides useful in the present invention are conventional polyimides, that is those substantially 100 mol % in the amount of imide group represented by the formula (1) such as those described in U.S.P. 2,710,853, U.S.P.2,712.543, U.S.P.2,731,447$_1$ U.S.P.2,880,230, U.S.P.2.900.369, etc, polyamideimides, such as those described in U.S.P.2,421.024, U.S.P.3,182.073,etc: polyesterimides, such as those descrived in U.S.P.4,329,397, etc.

In the present invention the precoating layer 6 can be formed easily by coating on the surface of a naked optical conductor comprising a silica glass fiber with, for example, a commercially available polyimide varnish which satisfies the above mentioned requirement concerning sodium-potassium content, and then by baking the varnish layer. The coating of the varnish is conducted preferably as soon as the naked optical conductor comprising a silica glass fiber is just formed by heat-drawing a preform thereof. The thickness of the precoating layer 6 is preferably at least 5 $\mu$m from a standpoint of obtaining an optical conductor comprising a silica glass fiber having more excellent radiation resistance , furtheremore at least 10 $\mu$m, especially in the case of obtaining a silica glass multiple optical fiber.

The following examples illustrate in greater detail the optical conductor of the present invention, but they are not to be construed as limiting the scope of the present invention.

Comparative Example 1;

About 10,000 of the optical fibers each of which has a three-layer structure consisting of a pure silica glass core, a cladding layer composed of a silica glass doped with boron and fluorine, and a support layer

composed of a natural silica glass, were filled compactly in a natural silica glass tube. and then the tube was drawn by heating to a temperature of 2,100 °C to form a multiple optical fiber having an outer diameter of 1.0 mm. Just after drawing the multiple optical fiber was coated with a polyimide varnish ( hereinafter referred to as Varnish A ) of Du.Pont Co. ( U.S.A.) 65 ppm in potassium content, and 19 ppm in sodium content, and baked to form a baked polyimide precoating layer 50 µm in thickness on the surface of the multiple optical fiber.

Comparative Example 2;

A multiple optical fiber was produced in the same manner as in Comparative Example 1 except that a polyimide varnish ( Varnish B ) of Tore Co. ( Japan ) 80 ppm in potassium content and 20 ppm in sodium content was used instead of Varnish A.

Comparative Example 3;

A multiple optical fiber was produced in the same manner as in Comparative Example 1 except that a polyimide varnish ( Varnish C ) of Ube Kosan Co. ( Japan )110 ppm in potassium content and 30 ppm in sodium content was used instead of Varnish A.

Example 1;

A multiple optical fiber was produced in the same manner as in Comparative Example 1 except that a polyimide varnish ( Varnish D ) which is obtained by refining Varnish A and is 0.5 ppm in potassium content and 0.2 ppm in sodium content was used instead of Varnish A.

Example 2;

A multiple optical fiber was produced in the same manner as in Comparative Example 1 except that a polyimide varnish ( Varnish E ) which is obtained by refining Varnish A and is 6.2 ppm in potassium content and 2.4 ppm in sodium content was used instead of Varnish A.

Example 3;

A multiple optical fiber was produced in the same manner as in Comparative Example 1 except that a polyimide varnish ( Varnish F ) which is obtained by refining Varnish B and is 0.8 ppm in potassium content and 0.3 ppm in sodium content was used instead of Varnish A.

Example 4;

A multiple optical fiber was produced in the same manner as in Comparative Example 1 except that a polyimide varnish ( Varnish G ) which is obtained by refining Varnish C and is 2.9 ppm in potassium content and 0.8 ppm in sodium content was used instead of Varnish A.

Potassium and sodium contents in the varnish used was determined by the following method;

A varnish to be determined was treated under the condition of 200°C, 1.33 Pa (0.01 mm Hg) to remove thoroughly the solvent included. Ten gram of sample taken from the varnish thus treated was burned, thenafter completely laid in ashes by heating at 800 °C in a platinum crucible. The ashes in the crucible were dissolved in 50 cc of 1 N-Hcl aqueous solution and subjected to quantitative determination of potassium element and sodium element by means of an atomic absorption spectrophotometer.

The radiation resistance of each silica glass multiple optical fiber of Comparative Examples 1 to 3 and Examples 1 to 4 was evaluated by the following manners;

A silica glass optical multiple fiber was irradiated by gamma rays from $Co^{60}$ at a temperature of 250°C for total doses of 416,500 Rad. Ten of test specimens, each 30 cm long, were sampled at random from the above fiber thus irradiated. A test specimen was bended in U-letter shape and 50 mm in radius of curvature, and the both ends thereof were rotated at a rate of 60 r.p.m. around the center axis of the fiber to mutually opposite directions ( in other words, the test specimen was rotated without being twisted ), and the number of rotation taken to cut the test specimen in fatigue was measuared.

The test results are shown in Table below. Among 10 test specimens, the number of those which cut at rotation numbers of less than 10 is shown in the column of " Less than 10 rotations ", while the number of

those which cut at rotation numbers falling in a range of from 10 to 100 is shown in the column of " 10 to 100 rotations ".

Table

| Radiation and Heat Resistance | | |
|---|---|---|
| No. of Co.Example Example | & Less than 10 Rotations | 10 to 100 Rotations |
| Co.Example | 1 4 | 3 |
| 2 | 4 | 2 |
| 3 | 7 | 1 |
| Example 1 | 0 | 0 |
| 2 | 0 | 2 |
| 3 | 0 | 0 |
| 4 | 0 | 1 |

From the test results, it is obvious that the multiple optical fibers of Examples 1 to 4 keep excellent mechanical strength even after being irradiated.

**Claims**

**1.** An optical conductor (1) comprising a silica glass fiber (2, 3) which has a primary coating layer (6) composed of a polyimide, characterized in that the total content of sodium element and potassium element within the polyimid is less than 50 ppm.

**2.** An optical conductor of claim 1, wherein said primary coating layer is at least 5 µm in thickness.

**3.** An optical conductor of claim 1, wherein said silica glass fiber is a fiber assembly of a plurality of optical fibers each of which has a three-layer structure consisting of a glass core (2), a cladding layer (3) and a support layer (4), and wherein said primary coating layer is at least 10 µm in thickness.

**Revendications**

**1.** Un guide optique (1) comprenant une fibre de verre de silice (2, 3) qui a une couche de revêtement principale (6) constituée d'un polyimide, caractérisé en ce que la teneur totale de l'élément de sodium et de l'élément de potassium dans le polyimide est inférieure à 50 ppm.

**2.** Un guide optique selon la revendication 1, dans lequel ladite couche de revêtement principale a une épaisseur d'au moins 5 µm.

**3.** Un guide optique selon la revendication 1, dans lequel ladite fibre de verre de silice est un ensemble formé d'une pluralité de fibres optiques, chacune d'elles ayant une structure à triple couche d'une âme de verre (2), d'une couche de revêtement (3) et d'une couche de support (4), dans laquelle ladite couche de revêtement principale a une épaisseur d'au moins 10 µm.

**Patentansprüche**

**1.** Optischer Leiter (1), umfassend eine Siliciumdioxid-Glasfaser (2, 3), die eine aus einem Polyimid bestehende primäre Überzugsschicht (6) aufweist, dadurch gekennzeichnet, daß der Gesamt-Gehalt des Elements Natrium und des Elements Kalium innerhalb des Polyimids kleiner als 50 ppm ist.

**2.** Optischer Leiter (1) nach Anspruch 1, worin die primäre Überzugsschicht eine Dicke von wenigstens 5 µm aufweist.

**3.** Optischer Leiter (1) nach Anspruch 1, worin die Siliciumdioxid-Glasfaser eine Faser-Baugruppe aus einer Mehrzahl optischer Fasern ist, von denen jede eine Drei-Schichten-Struktur besitzt, die aus einem

Glas-Kern (2), einer Umhüllungsschicht (3) und einer Trägerschicht (4) besteht, und worin die primäre Überzugsschicht eine Dicke von wenigstens 10 µm aufweist.

FIG.1

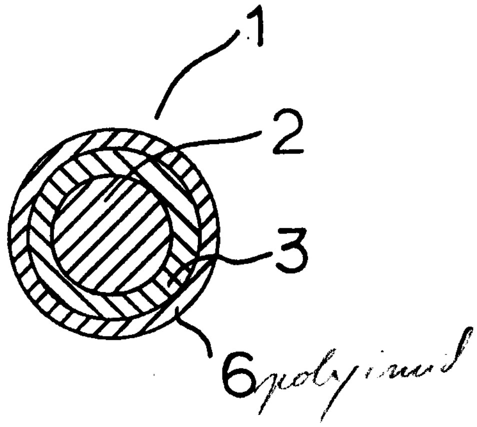


FIG.2

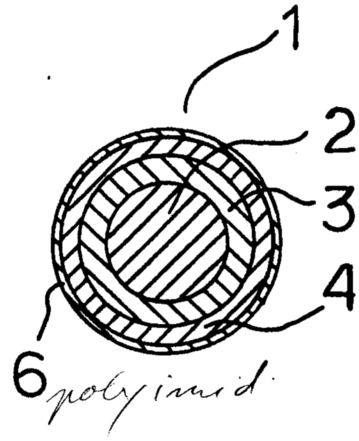


FIG.3

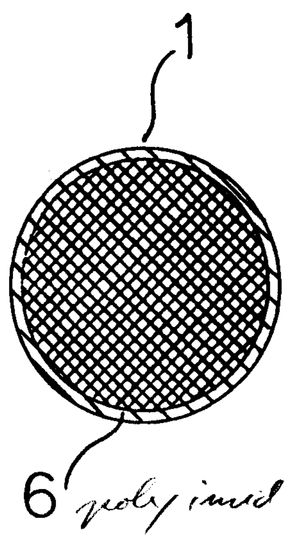


FIG.4